(19) Europäisches Patentamt
European Patent Office
Office européen des brevets

(11) Veröffentlichungsnummer: **0 235 082**
**B1**

(12) # EUROPÄISCHE PATENTSCHRIFT

(45) Veröffentlichungstag der Patentschrift: **26.07.89**

(51) Int. Cl.⁴: **A01N 43/653**
// (A01N43/653, 43:40)

(21) Anmeldenummer: **87810078.3**

(22) Anmeldetag: **09.02.87**

(54) **Mikrobizide.**

(30) Priorität: **14.02.86 CH 595/86**

(43) Veröffentlichungstag der Anmeldung:
**02.09.87 Patentblatt 87/36**

(45) Bekanntmachung des Hinweises auf die Patenterteilung:
**26.07.89 Patentblatt 89/30**

(84) Benannte Vertragsstaaten:
**AT BE CH DE ES FR GB GR IT LI LU NL SE**

(56) Entgegenhaltungen:
**EP-A- 0 048 997**

(73) Patentinhaber: **CIBA-GEIGY AG, Klybeckstrasse 141, CH-4002 Basel(CH)**

(72) Erfinder: **Janicke, Reinhard, Dr., Hammerstrasse 132, CH-4057 Basel(CH)**
Erfinder: **Nyfeler, Robert, Dr., Bärenfelserstrasse 8, CH-4057 Basel(CH)**

**EP 0 235 082 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft fungizide Gemische mit synergistisch gesteigerter Wirkung gegen Pilze und Verfahren zur Anwendung solcher Gemische.

Die Mittel gemäss vorliegender Erfindung basieren auf zwei Wirkstoffen, die beide als Ergosterin-Synthesehemmer bekannt geworden sind, jedoch zwei unterschiedlichen chemischen Klassen angehören.

Die Komponente I ist der Wirkstoff Propiconazol, 1-[2-(2,4-Dichlorphenyl)-4-propyl-1,3-dioxolan-2-ylmethyl]-1H-1,2,4,-triazol der Formel

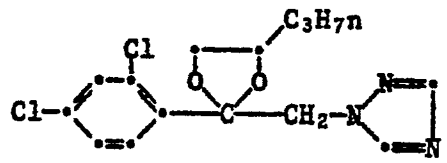

(I)

oder eines seiner Salze. Der Wirkstoff wird in der GB-1,522,657 beschrieben.

Die Komponente II ist der Wirkstoff Fenpropidin, 1-[3-(4-tert.Butylphenyl)-2-methylpropyl]-piperidin der Formel

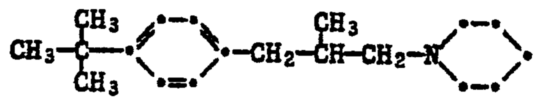

(II)

oder eines seiner Salze. Beschrieben wird der Wirkstoff in der DE-OS 27 52 135.

Propiconazol, die Komponente I, kann in vier stereoisomeren Formen vorliegen, die unterschiedliche fungizide Wirkung haben. Fenpropidin, die Komponente II, tritt in zwei enantiomeren Formen auf, die gleichfalls verschiedene fungizide Wirkung haben. Die Erfindung schliesst Gemische reiner Isomeren I und II mit ein.

Unter den Säuren, die zur Herstellung von Salzen der Formel I oder II verwendet werden können, sind zu nennen:
Halogenwasserstoffsäure wie Fluorwasserstoffsäure, Chlorwasserstoffsäure, Bromwasserstoffsäure oder Jodwasserstoffsäure sowie Schwefelsäure, Phosphorsäure, Salpetersäure und organische Säuren wie Essigsäure, Trifluoressigsäure, Trichloressigsäure, Propionsäure, Glycolsäure, Thiocyansäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure, 2-Acetoxybenzoesäure oder 1,2-Naphthalin-disulfonsäure.

Der Begriff Salze schliesst auch Metallkomplexe der beiden basischen Komponenten I und II ein. Diese Komplexe können wahlweise nur eine Komponente oder auch beide Komponenten unabhängig betreffen. Es lassen sich auch Metallkomplexe herstellen, die beide Wirkstoffe I und II miteinander zu einem gemischten Komplex verbinden.

Metallkomplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen, Kobalt, Nickel, Kupfer, Zink usw. Bevorzugt sind die Nebengruppen-Elemente der 4. Periode. Die Metalle können dabei in den verschiedenen ihnen zukommenden Wertigkeiten vorliegen. Die Metallkomplexe können ein- oder mehrkernig auftreten, d.h. sie können ein oder mehrere organische Molekülanteile als Liganden enthalten, wie etwa bei den vorerwähnten Mischkomplexen aus Propiconazol und Fenpropidin.

In der Praxis setzt man vorteilhaft die reinen Wirkstoffe I und II ein, denen man auch weitere agrarchemische Aktivsubstanzen wie Insektizide, Akarizide, Nematizide, Herbizide, Wuchsregulatoren und Düngemittel, insbesondere aber weitere Mikrobizide, zufügen kann.

Es gehört zum Wissen des Fachmanns, dass sich das Fungizid-Spektrum eines Wirkstoffs in der Regel durch Zusatz eines zweiten Fungizids, das eine andere Wirkungsrichtung besitzt, verbreitern lässt. Der Fachmann wird dabei so vorgehen, dass er zwei Aktivsubstanzen kombiniert, die chemisch zueinander verträglich sind und die zweckmässigerweise als Fungizide durch unterschiedliche biologische Mechanismen wirken. So beschreibt z.B. die GB-Anmeldung Nr. 2,110,934 fungizide Mischungen, bei denen die eine Komponente einen Adenosin-Desaminase-Hemmer, die andere einen Inhibitor für die Biosynthese des Ergosterins (in der Zellmembran des Pilzes) darstellt. In der GB-2,110,934 werden unter den Ergosterin-Inhibitoren sowohl Triazol-Derivate wie auch Piperidin-Derivate neben anderen Wirkstofftypen genannt.

Ueberraschenderweise hat sich gezeigt, dass die zwei aus der gleichen Gruppe der Biosynthese-Hemmer des Ergosterins bekanntgewordenen fungiziden Wirkstoffe Propiconazol und Fenpropidin im Gemisch oder unmittelbar nacheinander eingesetzt eine sprunghaft verbesserte Wirkung entfalten, die nicht nur derjenigen der Einzelkomponenten überlegen ist, sondern im Sinne eines Synergismus deutlich überadditiv ist.

Von einer solchen Wirkstoffmischung werden darüberhinaus auch Krankheitserreger voll bekämpft, die gegen Fungizide aus der Klasse der Triazole verminderte Sensitivität zeigen.

Die vorliegende Erfindung stellt daher eine ganz wesentliche Bereicherung der Technik dar.

Gegenstand der vorliegenden Erfindung ist neben dem Zweikomponenten-Gemisch auch ein Verfahren zur Bekämpfung von Pilzen, das gekennzeichnet ist durch Behandlung einer durch Pilze befallenen oder gefährdeten Stelle in beliebiger Reihenfolge oder gleichzeitig mit a) dem Wirkstoff Propiconazol der Formel I oder einem seiner Salze und mit b) dem Wirkstoff Fenpropidin der Formel II oder einem seiner Salze, wobei die Salze auch so gewählt sein können, dass beide Wirkstoffe an einen Säurerest oder, im Falle eines Metallkomplexes, an ein zentrales Metall-Kation gebunden sind.

Günstige Mischungsverhältnisse der beiden Wirkstoffe sind I:II = 20:1 bis 1:20, besonders 10:1 bis 1:20, bevorzugt I:II = 5:1 bis 1:5. In vielen Fällen sind Mischungen vorteilhaft, bei denen das Mischungsverhältnis der reinen Aktivsubstanzen I:II = 1:1 bis 1:5, besonders 3:2 bis 1:3 beträgt, z.B. 2:5.

Die erfindungsgemässen Wirkstoffmischungen I+II besitzen sehr vorteilhafte kurative, präventive und systemische Fungizid-Eigenschaften zum Schutz von Kulturpflanzen. Mit den vorliegenden Wirkstoffmischungen können an Pflanzen oder an Pflanzenteilen (Früchte, Blüten, Laubwerk, Stengel, Knollen, Wurzeln) von unterschiedlichen Nutzkulturen die auftretenden Mikroorganismen eingedämmt oder vernichtet werden, wobei auch später zuwachsende Pflanzenteile von derartigen Mikroorganismen verschont bleiben. Dies trifft insbesondere auch auf Mikroorganismen zu, die gegen Fungizide aus der Triazol-Klasse leichte Resistenzen entwickelt haben.

Die Wirkstoff-Gemische sind gegen die den folgenden Klassen angehörenden phytopathogenen Pilze wirksam: Ascomyceten (z.B. Venturia, Podosphaera, Erysiphe, Monilinia, Uncinula); Basidiomyceten (z.B. die Gattungen Hemileia, Rhizoctonia, Puccinia); Fungi imperfecti (z.B. Botrytis, Helminthosporium, Rhynchosporium, Fusarium, Septoria, Cercospora, Alternaria und insbesondere Pyricularia). Die Wirkstoffgemische wirken systemisch. Sie können auch als Beizmittel zur Behandlung von Saatgut (Früchte, Knollen, Körner) und Pflanzenstecklingen zum Schutz vor Pilzinfektionen sowie gegen im Erdboden auftretende phytopathogene Pilze eingesetzt werden. Die erfindungsgemässen Wirkstoff-Gemische zeichnen sich durch besonders gute Pflanzenverträglichkeit und durch ihre Umweltfreundlichkeit aus.

Als Zielkulturen für die hierin offenbarten Indikationsgebiete gelten im Rahmen dieser Erfindung z.B. folgende Pflanzenarten: Getreide: (Weizen, Gerste, Roggen, Hafer, Reis, Sorghum und Verwandte); Rüben: (Zucker- und Futterrüben); Kern-, Stein- und Beerenobst: (Aepfel, Birnen, Pflaumen, Pfirsiche, Mandeln, Kirschen, Erd-, Him- und Brombeeren); Hülsenfrüchte: (Bohnen, Linsen, Erbsen, Soja); Oelkulturen: (Raps, Senf, Mohn, Oliven, Sonnenblumen, Kokos, Rizinus, Kakao, Erdnüsse); Gurkengewächse: (Kürbis, Gurken, Melonen); Fasergewächse: (Baumwolle, Flachs, Hanf, Jute); Citrusfrüchte: (Orangen, Zitronen, Grapefruit, Mandarinen); Gemüsesorten: (Spinat, Kopfsalat, Spargel, Kohlarten, Möhren, Zwiebeln, Tomaten, Kartoffeln, Paprika); Lorbeergewächse: (Avocado, Cinnamonum, Kampfer) oder Pflanzen wie Mais, Tabak, Nüsse, Kaffee, Zuckerrohr, Tee, Weinreben, Hopfen, Bananen- und Naturkautschukgewächse sowie Zierpflanzen (Blumen, Sträucher, Laubbäume und Nadelbäume wie Koniferen). Diese Aufzählung stellt keine Limitierung dar.

Die Wirkstoff-Gemische der Formeln I und IIwerden üblicherweise in Form von Zusammensetzungen verwendet. Die Wirkstoffe der Formel I und die der Formel II können gleichzeitig, können aber auch nacheinander innerhalb 24 Stunden auf die zu behandelnde Fläche oder Pflanze gegeben werden, zusammen mit gegebenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen eines Wirkstoff-Gemisches das mindestens je einen dieser Wirkstoffe I und II enthält, ist das Aufbringen auf die oberirdischen Pflanzenteile, vor allem das Blattwerk (Blattapplikation). Anzahl der Applikationen und Aufwandmenge richten sich nach den biologischen und klimatischen Lebensbedingungen für den Erreger. Die Wirkstoffe können aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt z.B. in Form von Granulat (Bodenapplikation). Die Verbindungen der Formeln I und II können auch auf Samenkörner aufgebracht werden (Coating), indem man die Körner entweder nacheinander in einer flüssigen Zubereitung eines Wirkstoffs tränkt oder sie mit einer bereits kombinierten Zubereitung beschichtet. Darüberhinaus sind in besonderen Fällen weitere Applikationsarten bei Pflanzen möglich, z.B. die gezielte Behandlung der Knospen oder der Fruchtstände.

Die Verbindungen der Kombination werden dabei in unveränderter Form oder vorzugsweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, ver-

dünnten Emulsionen, Spritzpulvern, löslichen Pulvern, Stäubemitteln, Granulaten, durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen liegen im allgemeinen bei 50 g bis 2 kg AS/ha, insebesondere bei 100 g bis 600 g AS/ha.

Die Formulierungen werden in bekannter Weise hergestellt, z.B. durch inniges Vermischen und/oder Vermahlen der Wirkstoffe mit Streck mitteln, wie z.B. mit Lösungsmitteln, festen Trägerstoffen, und gegebenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethyl- oder ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden. Besonders vorteilhafte, applikationsfördernde Zuschlagstoffe, die zu einer Reduktion der Aufwandmenge führen können, sind ferner natürliche (tierische oder pflanzliche) oder synthetische Phospholipide aus der Reihe der Kephaline und Lecithine, wie z.B. Phosphatidylethanolamin, Phosphatidylserin, Phosphatidylglycerin, Lysolecithin, Plasmalogene oder Cardiolipin, die man beispielsweise aus tierischen oder pflanzlichen Zellen, insbesondere aus Hirn, Herz, Leber, Eidotter oder Sojabohnen gewinnen kann. Verwendbare Handelsmischungen sind z.B. Phosphatidylchlorin-Mischungen. Synthetische Phospholipide sind z.B. Dioctanoylphosphatidylcholin und Dipalmitoylphosphatidylcholin.

Als oberflächenaktive Verbindungen kommen je nach Art der zu formulierenden Wirkstoffe der Formel I und II nichtionogene, kation- und/oder anionaktive Tenside mit guten Emulgier-, Dispergier- und Netzeigenschaften in Betracht. Unter Tensiden sind auch Tensidgemische zu verstehen.

Im folgenden bedeutet "Wirkstoff" ein Gemisch aus I und II im Verhältnis 3:2 bis 1:3. (% = Gewichtsprozent).

| Spritzpulver | a) | b) | c) |
|---|---|---|---|
| Wirkstoff | 25% | 50% | 75% |
| Na-Ligninsulfonat | 5% | 5% | |
| Na-Laurylsulfat | 3% | – | 5% |
| Na-Diisobutylnaphthalinsulfonat | – | 6% | 10% |
| Octylphenolpolyethylenglykolether (7–8 Mol Ethylenoxid) | – | 2% | – |
| Hochdisperse Kieselsäure | 5% | 10% | 10% |
| Kaolin | 62% | 27% | – |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
|---|---|
| Wirkstoff | 10% |
| Octylphenolpolyethylenglykolether (4–5 Mol Ethylenoxid) | 3% |
| Ca-Dodecylbenzolsulfonsat | 3% |
| Ricinusölpolyglykolether (35 Mol Ethylenoxid) | 4% |
| Cyclohexanon | 30% |
| Xylolgemisch | 50% |

Aus diesem Konzentrat können durch Verdünnen mit Wasser Emulsionen jeder gewünschten Konzentration hergestellt werden.

| Stäubemittel | a) | b) |
|---|---|---|
| Wirkstoff | 5% | 8% |
| Talkum | 95% | – |
| Kaolin | – | 92% |

Man erhält anwendungsfertige Stäubemittel, indem der Wirkstoff mit dem Träger vermischt und auf einer geeigneten Mühle vermahlen wird.

| Extruder Granulat | |
|---|---|
| Wirkstoff | 10% |
| Na-Ligninsulfonat | 2% |
| Carboxymethylcellulose | 1% |
| Kaolin | 87% |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
|---|---|
| Wirkstoff | 3% |
| Polyethylenglykol (MG 200) | 3% |
| Kaolin | 94% |
| (MG = Molekulargewicht) | |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

Ein synergistischer Effekt liegt bei Fungiziden immer dann vor, wenn die fungizide Wirkung der Wirkstoffkombination grösser ist als die Summe aus der Wirkung der einzeln applizierten Wirkstoffe.

Die zu erwartende Wirkung E für eine gegebene Wirkstoff-Kombination, z.B. zweier Fungizide, gehorcht der sogenannten COLBY-Formel [ursprünglich nur zur Berechnung des Erwartungswertes E von Herbizidmischungen verwendet]:

$$E = X + Y - \frac{X \cdot Y}{100}$$

wobei X = % Wirkung durch Fungizid I bei p g AS/ha
Y = % Wirkung durch Fungizid II bei q g AS/ha

E = Erwartete Wirkung der Fungizide I + II bei p + q g Aktivsubstanz per Hektar.

[1) COLBY, LR. "Calculating synergistic and antagonistic responses of herbicide combination". Weeds 15, S. 20-22.
2) LIMPEL and al., 1062 "Weeds control by ... certain combinations". Proc. NEWCL. Vol. 16, S. 48-53]

Wenn die tatsächlich beobachtete Wirkung (O) grösser ist als die berechnete (E), so ist die Kombination in ihrer Wirkung überadditiv, d.h. es liegt ein synergistischer Effekt vor.
Im nachfolgenden Beispiel wurde E gemäss obiger Gleichung berechnet.

Fungizide Wirkung gegen "Echten Mehltau" auf Winterweizen

In 11 cm tiefen Saatschalen (Fläche 30 x 40 cm) werden im Gewächshaus bei 20°C ca. 95 Pflanzen der Winterweizensorte "Kanzler" herangezogen. Im 2-Blatt-Stadium werden die Pflanzen mit einem Isolat von Erysiphe graminis tritici, inokuliert, das volle Sensitivität gegen DMI-Fungizide aufweist.
Bei Sichtbarwerden des Befalls 5 Tage nach Inokulation (3-Blatt-Stadium; Befall 10-12 %) wird der Einzelwirkstoff bzw. das Fungizid-Gemisch als wässrige Suspension mit einem Spritzbalken unter Feldbedingungen appliziert. Nach der Applikation wird die Veränderung des Befalls auf der bei Inokulation vorhandenen Blattfläche (Auswertung des Primärbefalls) in regelmässigen Abständen bestimmt.
Es werden die in der Tabelle wiedergegebenen Aufwandmengen eingesetzt. Jeder der 16 Teil-Versuche läuft in 3 Wiederholungen. Im folgenden wird die Auswertung nach 22 Tagen bestimmt.

Tabelle

Auswertung 22 Tage nach Applikation

| Teilversuche Nr. | g Aktivsubstanz/ha Wirkstoff I | Wirkstoff II | Pilzbefall in % | E % Wirkung berechnet [COLBY] | O % Wirkung gefunden |
|---|---|---|---|---|---|
| 1 (Kontrolle) | – | – | 100 | – | – |
| 2 | 10 | – | 97 | – | 3 |
| 3 | 30 | – | 47 | – | 53 |
| 4 | 50 | – | 16 | – | 84 |
| 5 | – | 10 | 95 | – | 5 |
| 6 | – | 30 | 87 | – | 13 |
| 7 | – | 50 | 63 | – | 37 |
| 8 | 10 | 10 | 83 | 12 | 17 |
| 9 | 10 | 30 | 63 | 19 | 37 |
| 10 | 10 | 50 | 22 | 41 | 78 |
| 11 | 30 | 10 | 37 | 55 | 63 |
| 12 | 30 | 30 | 16 | 59 | 84 |
| 13 | 30 | 50 | 4 | 70 | 96 |
| 14 | 50 | 10 | 7 | 85 | 93 |
| 15 | 50 | 30 | 9 | 86 | 91 |
| 16 | 50 | 50 | 2 | 90 | 98 |

Wie ersichtlich, tritt bei ganz unterschiedlichen Mischungsverhältnissen in den Teilversuchen Nr. 9 bis Nr. 16 eine synergistisch gesteigerte Fungizid-Wirkung auf.
Aehnliche synergistisch gesteigerte Wirkungen werden auch gegen Gerstenmehltau, Getreideroste (Puccinia spp.) und andere Pathogene erzielt.

## Patentansprüche

1. Fungizides Mittel auf Basis von mindestens zwei Wirkstoffen, dadurch gekennzeichnet, dass der eine Wirkstoff Propiconazol der Formel I

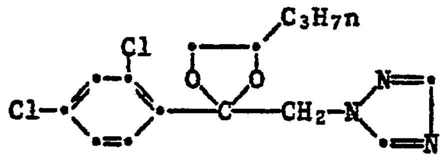

(I)

oder eines seiner Salze und der andere Wirkstoff Fenpropidin der Formel II

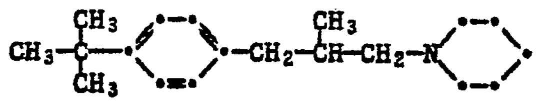

(II)

oder eines seiner Salze ist.

2. Mittel nach Anspruch 1, dadurch gekennzeichnet, dass das Gewichtsverhältnis I:II = 20:1 bis 1:20 beträgt.

3. Mittel nach Anspruch 2, dadurch gekennzeichnet, dass das Gewichtsverhältnis I:II = 5:1 bis 1:5 beträgt.

4. Mittel nach Anspruch 3, dadurch gekennzeichnet, dass das Gewichtsverhältnis I:II = 3:2 bis 1:3 beträgt.

5. Mittel nach Anspruch 1, dadurch gekennzeichnet, dass das Gewichtsverhältnis I:II = 10:1 bis 1:20 beträgt.

6. Mittel nach Anspruch 1, dadurch gekennzeichnet, dass das Gewichtsverhältnis I:II = 1:1 bis 1:5 beträgt.

7. Verwendung einer Wirkstoffkombination gemäss Anspruch 1 zur Bekämpfung von Pilzen oder zur Verhütung von Pilzbefall.

8. Verfahren zur Bekämpfung von Pilzen, dadurch gekennzeichnet, dass man in beliebiger Reihenfolge oder gleichzeitig eine durch Pilze befallene oder gefährdete Stelle mit a) dem Wirkstoff Propiconazol der Formel I

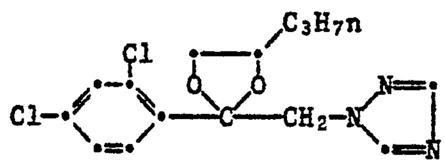

(I)

oder einem seiner Salze und mit b) dem Wirkstoff Fenpropidin der Formel II

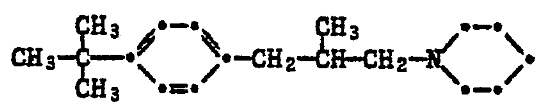

(II)

oder einem seiner Salze behandelt.

9. Mittel zur Bekämpfung phytopathogener Pilze und zur Verhütung von Pilzbefall auf Basis einer Mischung von zwei Pflanzenfungiziden im Gemisch mit einem geeigneten Trägermaterial und/oder Streckmittel, dadurch gekennzeichnet, dass das Mittel asl Komponente I den Wirkstoff 1-[2-(2,4-Dichlorphenyl)-4-propyl-1,3-dioxolan-2-ylmethyl]-1H-1,2,4-triazol der Formel

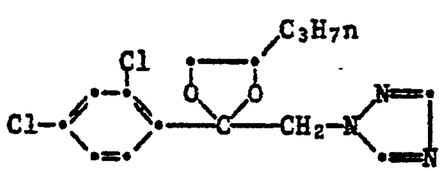

oder eine seiner Salze und als Komponente II den Wirkstoff 1-[3-(4-tert.Butylphenyl)-2-methylpropyl]-piperidin der Formel

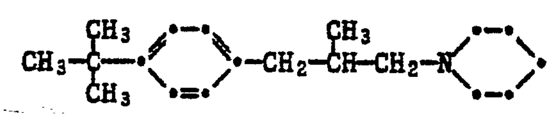

oder eines seiner Salze in einer eine synergistische Fungizidwirkung erzeugenden Menge enthält.

## Claims

1. A fungicidal composition based on at least two active components, one of which is propiconazol of formula I

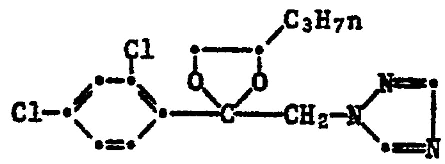

(I)

or a salt thereof, and the other is fenpropidin of formula II

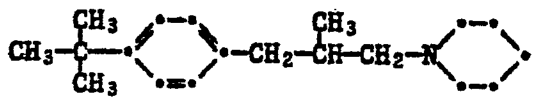

(II)

or a salt thereof.

2. A composition according to claim 1, wherein the weight ratio of I:II is 20:1 to 1:20.

3. A composition according to claim 2, wherein the weight ratio of I:II is 5:1 to 1:5.

4. A composition according to claim 3, wherein the weight ratio of I:II is 3:2 to 1:3.

5. A composition according to claim 1, wherein the weight ratio of I:II is 10:1 to 1:20.

6. A composition according to claim 1, wherein the weight ratio of I:II is 1:1 to 1:5.

7. Use of an active component combination according to claim 1 for controlling fungi or for preventing fungus attacks.

8. A method of controlling fungi, which method comprises treating a locus which is already infected by fungi, or is liable to be infected, in any order or simultaneously, with a) the active component propiconazol of formula I

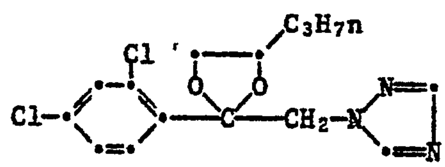

(I)

or a salt thereof and with b) the active component fenpropidin of formula II

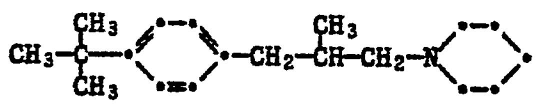

(II)

or a salt thereof.

9. A composition for controlling phytopathogenic fungi and for preventing fungus attacks, based on a mixture of two plant fungicides in admixture with a suitable carrier and/or extender, which composition contains as component I the active ingredient 1-[2-(2,4-dichlorophenyl)-4-propyl-1,3-dioxolan-2-ylmethyl]-1H-1,2,4-triazole of formula

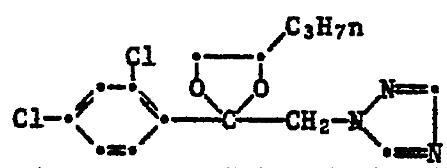

or a salt thereof, and as component II the active ingredient 1-[3-(4-tert.-butylphenyl)-2-methylpropyl]-piperidine of formula

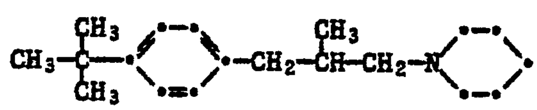

or a salt thereof in an amount producing synergistic fungicidal activity.

## Revendications

1. Produit fongicide à base d'au moins deux substances actives, caractérisé en ce que l'une des substances actives est le Propiconazol de formule I

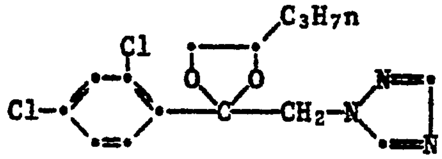

(I)

ou l'un de ses sels et l'autre substance active le Fenpropidin de formule II

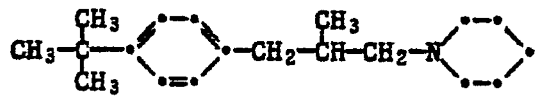

(II)

ou l'un de ses sels.

2. Produit selon la revendication 1, caractérisé en ce que les proportions relatives de mélange I:II en poids sont de 20:1 à 1:20.

3. Produit selon la revendication 2, caractérisé en ce que les proportions relatives de mélange I:II en poids sont de 5:1 à 1:5.

4. Produit selon la revendication 3, caractérisé en ce que les proportions relatives de mélange I:II en poids sont de 3:2 à 1:3.

5. Produit selon la revendication 1, caractérisé en ce que les proportions relatives de mélange I:II en poids sont de 10:1 à 1:20.

6. Produit selon la revendication 1, caractérisé en ce que les proportions relatives de mélange I:II en poids sont de 1:1 à 1:5.

7. Utilisation d'une combinaison de substances actives selon la revendication 1, pour combattre les mycètes ou pour protéger contre une attaque par les mycètes.

8. Procédé pour combattre les mycètes, caractérisé en ce que l'on traite un endroit infesté par les mycètes ou menacé par les mycètes, dans un ordre quelconque ou simultanément, par a) la substance active Propiconazol de formule I

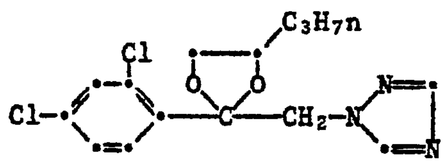

(I)

ou l'un de ses sels et b) la substance active Fenpropidin de formule II

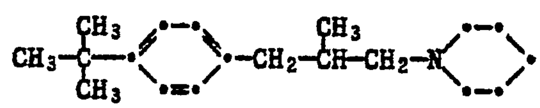

(II)

ou l'un de ses sels.

9. Produit pour combattre les mycètes phytopathogènes et pour protéger contre l'attaque par les mycètes, à base d'un mélange de deux phytofongicides en mélange avec un véhicule et/ou diluant approprié, caractérisé en ce que le produit contient en tant que composant I la substance active 1-[2-(2,4-dichlorophényl)-4-propyl-1,3-dioxolanne-2-yl-méthyl]-1H-1,2,4-triazole de formule

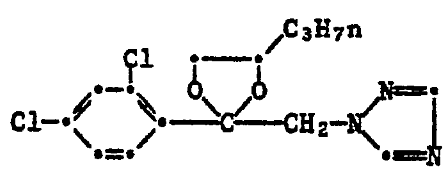

ou l'un de ses sels et en tant que composant II la substance active 1-[3-(4-tert-butylphényl)-2-méthylpropyl]-pipéridine de formule

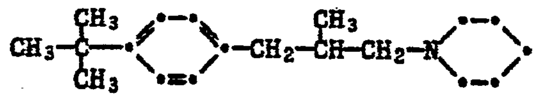

ou l'un de ses sels, en quantité conduisant à une activité fongicide synergétique.